# EUROPEAN PATENT SPECIFICATION

(11) **EP 2 375 891 B1**
(45) Date of publication and mention of the grant of the patent: **22.06.2016**
(21) Application number: 09774840.4
(22) Date of filing: 09.12.2009
(51) Int. Cl.: A01M 1/02, A01M 1/10

(54) **TRAPPING DEVICE FOR FRUGIVOROUS INSECTS**
FANGVORRICHTUNG FÜR FRUCHTSCHADINSEKTEN
DISPOSITIF DE PIÉGEAGE D'INSECTES FRUGIVORES

(30) Priority: 19.12.2008 ES 200802584 U
(43) Date of publication of application: 19.10.2011
(73) Proprietor: Probodelt S.L., 43870 Amposta (Tarragona) (ES)
(72) Inventor: RAMONEDA MOLINS, Juan, Evangelista, E-08230 Matadepera (Barcelona) (ES); ROIG REVERTÉ, Jordi, E-43870 Amposta (Tarragona) (ES)
(74) Representative: Curell Suñol S.L.P.
(86) International application number: PCT/EP2009/008784
(87) International publication number: WO 2010/069503

(56) References cited:
- WO-A1-2007/068329
- GB-A- 2 412 052
- US-A- 2 029 989
- US-A- 4 638 592
- US-A- 4 794 724
- US-A- 5 231 792
- US-A1- 2007 151 142

## Description

### Field of the invention

The invention relates to a trapping device for frugivorous insects according to the preamble of claim 1.

### State of the art

On farms with orange trees, lemon trees, peach trees, olive trees and others, it is known to control and eliminate, using trapping devices such as the one described above, frugivorous insects such as the *Ceratitis Capitata,* and the *Bactrocera oleae,* better known as the mediterranean fruit fly and the olive fruit fly respectively.

These trapping devices are used, mainly, for the insect's flight path surveying (monitoring), which consists in detecting the arrival of a possible pest. To this end, a few devices are deployed on the fruit farms, containing diffusers with attractant means and insecticide inside them. The attractant means make the insects enter the device and once inside, these insects are intoxicated and killed by the insecticide. The captured examples are counted regularly to determine the population evolution of a certain insect and to establish the risk that it may cause damage to a fruit crop.

Once it is determined that the level of the pest can cause economic losses, what is known in the art as massive trapping is performed. So, its second function is really to fight against the pest. In particular, approximately thirty-five or forty trapping devices are deployed per hectare of fruit farm. The operating principle is the same as that described for the flight's path surveying, but due to the greater density of devices per hectare, it is more effective against the pest.

A known trapping device, sold by the applicant company Probodelt S.L., is made up of a base and a cover that define an inner chamber. The base has three side holes wherein transparent side ducts are provided, which extend towards the chamber, and a vertical lower passage. The vapours of the attractants placed inside the chamber for trapping, come out through the side ducts. The side ducts also act as an entrance passage towards the inside of the device and to make the exit therefrom more difficult when the fly is inside said device. The entry of insects inside the device through the side holes is largely caused by the attractants contained therein, however the device itself does not actually facilitates their entry.

A massive trapping campaign can last between 60 and 120 days. Over this period, the effectiveness of the attractants and the insecticide diminish, and the catches reduce progressively because the attractants are only effective at a short distance from the trapping device, and therefore less insects enter inside. Consequently, it would be desirable to provide a device that facilitates the insects to enter through the side ducts irrespective of the intensity of the action of the attractants, and that increased the number of total catches per device, thereby improving the system's efficiency. This way the damage caused by the insects on the plants would be reduced to a greater extent.

Document WO2007/068329 A1 discloses a trapping device for frugivorous insects. The device comprises trapping means and a single diffuser of attractant means arranged inside the trapping means. The diffuser is made up of a container containing inside a support material. This support material, which is of the porous type, is impregnated with a solution comprising a diaminoalkane, ammonium acetate and trimethylamine.

Document US 2,029,989 discloses a flycatcher comprising a hollow body having a vertically swinging lid forming a cover thereto, a dome rising from the lid and having a transparent top panel separably fitted therewith, reticulated entrance cones fitted in the sides of the body and in the lid for the passage of flies from without the body inwardly thereof and upwardly into the dome and a sun rays' reflector concentrically about the cones fitting the lid and the bottom of the dome interiorly thereof.

Document US 4,638,592 discloses a containment type fly trap providing a translucent container releasably carrying an opaque yellow-green to yellow top with structure to aid hanging support. The top is upwardly convex and defines plural downwardly extending indentations each carrying in its medial part a conical entry tube with a sharp edge defining its lower orifice, above the top of the container structure. An aqeuous odoriferous mixture comprising yeast, egg and milk in a fermenting state is carried in the container as an attractant and to aid the demise of entrapped flies.

### Disclosure of the invention

The aim of the invention is to overcome this drawback. This purpose is achieved by means of a trapping device of the type indicated at the beginning according to the characterizing portion of claim 1.

The transparent side tubes in the state of the art devices avail of the phototropism of many flying insects, in other words, their attraction to light, to prevent them from leaving the device. In particular, when the insect finds itself inside the device it flies towards the light to try to get out. So, it either flies towards the cover or towards one of the transparent tubes hoping to find the exit. In this second case, often, the insect lands on the tube and confused, it tosses and turns around the transparent tube, thus being unable to find the exit hole. During the time that the insect is lost looking for the exit, the insecticide takes effect and kills the insect.

However, this same beneficial effect of preventing the insect from leaving the inside of the trapping device, has been proved neutral or even counterproductive for facilitating its entry. When the insect goes through one of the side entrance tubes, often, it simply remains inside the tube walks around its perimeter and does not actually enter the device. This is because, on the one hand, the insect receives the direct light that passes through the transparent tube and, on the other hand, because due to the transparency of the tube, it perceives images from outside through the cover and becomes confused, so that it is unable to find the actual entrance to the device. In a great number of cases, and particularly when the effect of the attractants is weak, in the end the insect does not enter the device and escapes the effects of the insecticide.

In the device according to the invention, the light penetrates the chamber through the translucent upper second zone, illuminating the inner chamber. However, semi-darkness is created in the opaque tubes because the light does not pass through them directly. During most of the daytime, the direct light that enters the inner chamber and falls on the exit mouth of the duct, does not get to illuminate the inside of the duct. In the event that the outside light falls on the outer walls of the device, in other words, directly on the exit mouth of the side duct, neither will it illuminate all the inside of the passage during most of the day. On the other hand, since the duct is opaque, the insect does not receive any information on the outside environment, except any that it may receive from one of the two duct mouths. In other words, no image is seen through the opaque wall of the side duct that could influence the insect to remain inside said duct.

The entering insect receives light stimuli from both duct mouths. The front stimulus, which is the decisive one in the invention for attracting the insect, comes from the inside of the device through the exit mouth, whereas the back stimulus since it comes from behind the insect, is not clearly perceived and therefore does not have such a notable influence. This way, due to phototropism and the relative darkness or semi-darkness created inside the duct, the insect is stimulated to advance through the duct towards the inside of the device. Once inside the device chamber, the insect tends to search again for the light source and the zone where it can see a potential exit. In other words, normally, it flies towards the second translucent zone, so that it becomes trapped inside the chamber.

Another particularly beneficial technical effect of the opacity of the duct, is that when the insect finds itself already in the chamber, in any zone away from the exit mouth of the side ducts, it cannot detect a light spot so clearly that facilitates it to find the exit through the ducts, as occurred with the transparent tubes in the state of the art. Also from any position that is not frontal to the tube, the insect cannot detect any image from the outside environment which indicates a potential exit. So, the insect's tendency to leave through the actual ducts is also reduced, because the insect tends to look for the exit again and again through the second translucent zone and therefore prolongs its time inside the device, with the above-mentioned advantages.

If the duct is tilted upwards, as well as facilitating the entry of the insect by creating a certain semi-darkness inside the duct, it also facilitates entry into the chamber by direct flight, whereas it hinders the insect's in flight exit, because it will be easier for the insect to enter the device in upward flight, but harder to leave in downward flight.

*A priori,* the colour of the entry duct or ducts and their position in the device can be any, provided that they are opaque. However, preferably the the side duct is provided in the first zone and the first zone and the side duct are the same colour. The *Ceratitis Capitata* is attracted by bright colours, particularly yellow and orange tones. In the case of the *Bactrocera oleae,* its colour attraction varies according to the sex of the insect. The male is attracted more by yellows and oranges, while females are attracted by reds and blacks. When the insect has already entered the chamber, the lack of contrast between the first zone and the duct will further hinder the insect's appreciation of the duct position and its detection of the exit through the exit mouth in the duct.

Alternatively, and depending on the insect species to be captured, the side duct is provided in the first zone and the first zone and the side duct are a different colour. For example, in the case of a device for capturing female examples of the *Bactrocera oleae,* the first zone can be red, while the ducts can be black.

In a particularly preferable way, said side duct is horizontal. In terms of the emanation of the attractants, this is the optimum configuration to facilitate the circulation of air entering and leaving the chamber.

Alternatively the device comprises an even number of said side ducts arranged in twos and with their exit mouths facing each other. This way, the entering insect, as well as receiving the light stimulus from the exit mouth, would see a potential exit through the duct opposite the one through which it is entering and this could stimulate the insect to enter the chamber.

Preferably the second zone is transparent. This ensures the maximum amount of light enters the device. This characteristic is particularly important on cloudy days when atmospheric light is attenuate and therefore it is advisable to intensify as much as possible the light that enters the chamber.

The invention also raises the problem of providing a device that can be stored and supplied simply. As already mentioned, massive trapping requires a large number of devices that must be transported directly to the fruit farm. Although it is not essential to the invention, the device chamber is advantageously defined by a base and a top cover. Also, preferably the duct is removable. This makes it easier to stack a large number of bases and covers separately. So, before preparing the devices for trapping, the ducts are assembled in the corresponding holes, the attractant and insecticide diffuser or diffusers are provided and finally the device is closed with the cover.

Alternatively, the chamber can also be shaped as a single hollow body comprising the entrance ducts.

### Brief description of the drawings

Other advantages and characteristics of the invention can be appreciated from the following description, wherein a non-limiting description of preferable embodiments of the invention are described, with reference to the accompanying drawings, wherein:
Fig. 1, a front view of the trapping device according to the invention.
Fig. 2, a partially cut view along a central plane of the device in Figure 1.
Fig. 2a, an enlarged detail of a duct of the device in Figure 2, with the light falling on the duct exit mouth.
Fig. 2b, an enlarged detail of a duct of the device in Figure 2, with the light falling on the duct entrance mouth.
Fig. 3, a front view of a second trapping device according to the invention.
Fig. 4, a cut view along a central plane of the device in Figure 3.

### Detailed description of some embodiments of the invention

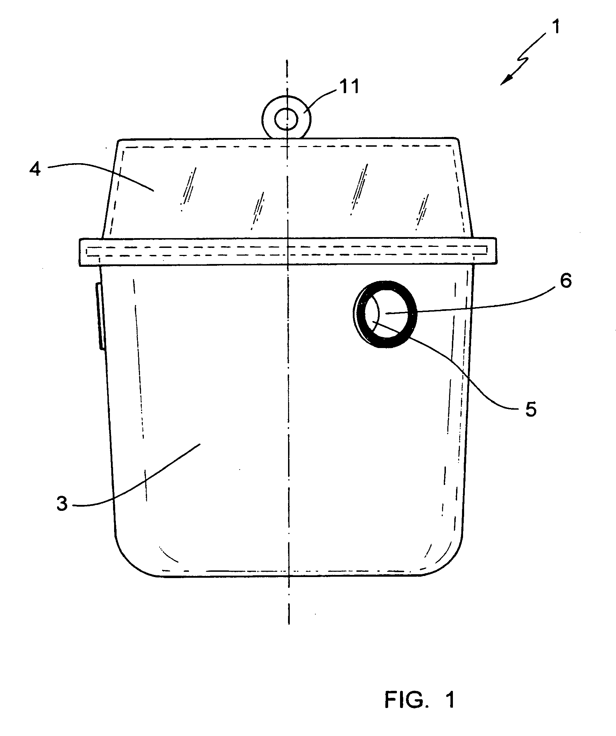

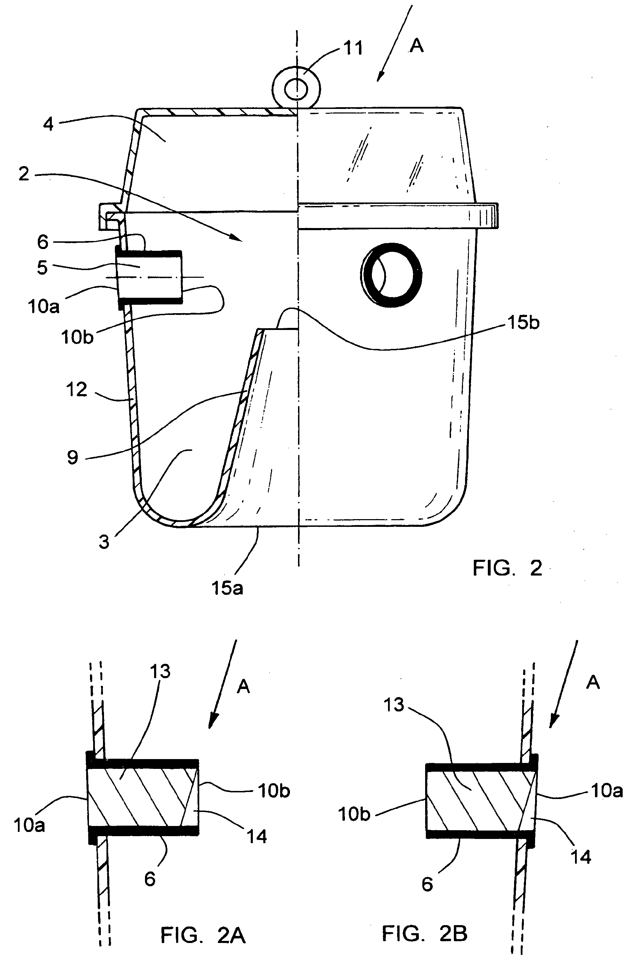

Figures 1 and 2 show a device 1 according to the invention which is made up of an opaque first zone 3, corresponding to the base and a translucent or transparent upper second zone 4, corresponding to the cover. So, the cover and base define the inner chamber 2 in which the entering insects are confined.

The colour of the base is preferably orange or yellowish to capture the *Ceratitis capitata,* but other colours can be used if the device is used for other species. The cover has an eyelet 11 to facilitate hanging device 1 from a tree.

As can be seen in Figure 2, device 1 has three side holes 5 uniformly distributed around the perimeter of the side wall 12 of the base. In these holes 5 respective opaque, black side ducts 6 are inserted, for the entrance to chamber 2 and arranged horizontally; in other words, transverse with respect to the vertical direction. Side ducts 6 have an entrance mouth 10a to chamber 2 and an exit mouth 10b, which in this case are opposite one another. Also, at the bottom of base 3 a vertical duct 9 is provided which also facilitates insects entering this zone.

Vertical duct 9 does not fulfill the same purpose as side ducts 6. Side ducts 6 are more exposed to the air current that may exist on the fruit farm and make it much easier to diffuse the vapours of the attractant means, because it is much easier for the air to penetrate 1 from the side instead of from below. This means it is likely that the insects approaching device 1 due to the effect of the attractant means, will try to penetrate chamber 2 through side ducts 6. On the other hand, vertical duct 9 is designed to avail of the characteristic of flying insects, such as flies, which find it easy to fly upwards. In addition, vertical duct 9 is opposite the translucent cover. Therefore, the insects approaching device 1 from the bottom, receive a direct light stimulus and will also see a possible exit through the cover, which causes them to enter the device 1.

Instead, side ducts 6 are not directly opposite the second translucent zone, so they cannot influence the insect's behaviour with images of the outside environment at the end of ducts 6 and through the action of direct outside light. On the other hand, as already explained, their horizontal orientation makes it easier to emit the attractant means. Therefore, side ducts 6 manage to solve the technical problem proposed by the invention by combining the opaqueness and transverse orientation of side ducts 6 with respect to the vertical direction. This way, the technical effect is achieved whereby throughout the day, or practically all day, the inside of side ducts 6 is in a sort of a semi-darkness and maintains its purpose of diffusing the attractant means.

Figure 2a uses a simple example to show a first case of how side duct 6, which is opaque and transverse with respect to the vertical direction, works. Arrow A indicates the light incidence angle when the light directly illuminates exit mouth 10b. With this angle of incidence, inside duct 6 a zone of semi-darkness 13 and an illuminated zone 14 are created. When the insect enters duct 6, it will detect the light at the back of the duct 6 and will tend to advance towards illuminated zone 14. In this case, it may happen that the insect remains in illuminated zone 14, but in any event, the probability that it ends up entering chamber 2 is very high, because from this position at the end of duct 6 on exit mouth 10b, it will be able to detect the clarity in chamber 2 coming from translucent zone 4 and also images of the outside environment, and will end up entering the device by following these stimuli.

Figure 2b shows the contrary situation. In this second case, the light falls on side duct 6 through entrance mouth 10a. However, the entering insect will detect more clearly the light coming from exit mouth 10b because it comes straight at it, whereas it will receive virtually no stimulus to move in the direction of entrance mouth 10a, because the insect has its back to the falling light that may enter through this mouth. This way, the insects end up advancing along side duct 6 and entering chamber 2, attracted by the light stimulus it receives from exit mouth 10b.

Contrary to the explanation so far, in the case of vertical duct 9, the light will fall directly and enter through inner end 15b and will leave through outer end 15a, whereby the desired darkening effect does not exist inside vertical duct 9, in contrast with respect to its ends 15a, 15b. On the other hand, the entering insect will perceive images of the outside environment through the cover, which influence it to look for the exit by advancing towards the chamber, which does not happen in the case of side ducts 6.

Finally, it can be seen that ducts 6 are removable. By virtue of this feature, when supplying devices 1, a large number of bases 3 and covers 4 can be stacked, taking up a very small space.

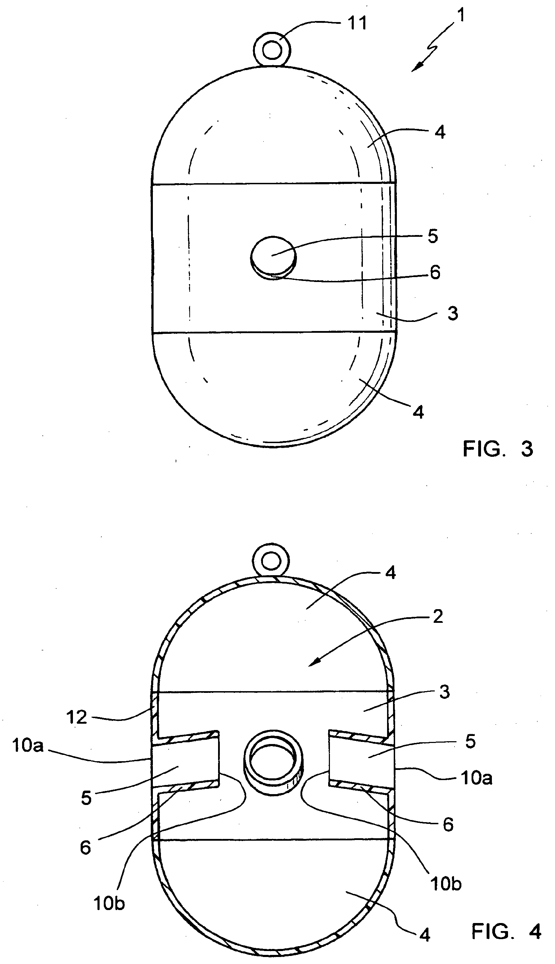

Figures 3 and 4 show an embodiment of device 1 that has an opaque first, zone 3 and two second transparent zones 4 with an equal shape that are mounted on both top and bottom ends of first zone 3. Also in this case, first zone 3 and the two second zones 4 define an inner chamber 2. The coupling between the parts can be achieved using any closing method known in the sector. For example, if it is desired to access the inside of chamber 2, a bayonet or click type closure can be applied. On the other hand, if it is desired to manufacture a disposable device, the coupling between the zones can be achieved using thermowelding or adhesive. Its egg shaped confirguration makes device 1 more rigid, and therefore it can be manufactured with a thinner wall thickness. In this case, device 1 also has an upper eyelet 11 for hanging.

Furthermore, both the attractant and the insecticide diffusers are placed in device 1 through side holes 5.

This device 1 has the advantage that side ducts 6 that form the four side holes 5 are formed integrally with first zone 3. This reduces the number of parts of device 1 and reduces tooling costs.

In this device 1, side ducts 6 are the same colour as first zone 3. Also, side ducts 6 are slightly transverse upwards. In this case, inside ducts 6 a noticeably lower light contrast is achieved than in the case of black ducts. Nevertheless, it is worth mentioning as an advantage that the insects find it harder to exit through side ducts 6 once they have entered chamber 2. From inside chamber 2, the insect does not clearly perceive the contrast between the walls of first zone 3 and side ducts 6, and this makes it harder for the insect to locate exit holes 5.

It is also appreciated in this device 1 that there are four side ducts 6 arranged in twos with their respective exit mouths 10b facing each other. By virtue of this feature, when the insect advances along the tube, as well as receiving the light influence mentioned above, it perceives images of the outside environment through exit mouth 10b of side duct 6 opposite the side duct 6 along which it is advancing. This leads the insect to identify the opposite side mouth 6 as a possible exit, and this brings it along towards chamber 2.

Finally, another advantage in this device 1 lies in the fact that the second transparent lower zone 4 makes it easier to check and count the dead insects in device 1. This is particularly useful for the insect's flight path surveying, as it makes it easier to verify the evolution of the insect population without the need to take devices 1 down from the tree and open them to check the number of captured individuals.

## Claims

1. Trapping device for frugivorous insects comprising
[a] a chamber (2) for confining insects and
[b] at least one side hole (5) from which a side duct (6) to said chamber (2) starts, having an entrance mouth (10a) and an exit mouth (10b),
[c] said chamber (2) comprising at least one opaque first zone (3) and a translucent upper second zone (4) through which direct outside light can enter said chamber (2), and
[d] said side duct (6) being transverse with respect to the vertical direction, according to an angle between 0 and 20º with respect to the horizontal direction,
**characterised in that** said side duct (6) is opaque.

2. Trapping device according to claim 1, **characterised in that** said side duct (6) is horizontal.

3. Trapping device according to claim 1 or 2, **characterised in that** said side duct (6) is provided in said first zone (3) and **in that** said first zone (3) and said side duct (6) are the same colour.

4. Trapping device according to claim 1 or 2, **characterised in that** said side duct (6) is provided in said first zone (3) and **in that** said first zone (3) and said side duct (6) are a different colour.

5. Trapping device according to any of the claims 1 to 4, **characterised in that** it comprises an even number of said side ducts (6) arranged in twos and with their exit mouths (10b) facing each other.

6. Trapping device according to any of the claims 1 to 5, **characterised in that** said second zone (4) is transparent.

7. Trapping device according to any of the claims 1 to 6, **characterised in that** said first zone (3) is a base and said second zone (4) is a cover and **in that** said side duct (6) is removable.

8. Use of a trapping device for trapping *Ceratitis Capitata* according to any of the claims 1 to 7, **characterised in that** said first zone (3) is orange or yellowish.

9. Use of a trapping device according to claim 8, **characterised in that** it comprises a duct (6) being orange or yellowish.

## Patentansprüche

1. Fallenvorrichtung für fruchtfressende Insekten, aufweisend
(a) eine Kammer (2) zum Einschließen von Insekten und
(b) mindestens eine seitliche Öffnung (5), von der ein seitlicher Kanal (6) zu der Kammer (2) beginnt, der eine Eintrittsöffnung (10a) und eine Austrittsöffnung (10b) aufweist,
(c) wobei die Kammer (2) mindestens eine opake erste Zone (3) und eine lichtdurchlässige obere zweite Zone (4) aufweist, durch die direktes Außenlicht in die Kammer (2) eintreten kann, und
(d) wobei der seitliche Kanal (6) in Bezug auf die vertikale Richtung quer angeordnet ist und entsprechend einem Winkel zwischen 0 und 20° in Bezug auf die horizontale Richtung verläuft,
**dadurch gekennzeichnet, dass** der seitliche Kanal (6) opak ist.

2. Fallenvorrichtung nach Anspruch 1,
**dadurch gekennzeichnet, dass** der seitliche Kanal (6) horizontal ist.

3. Fallenvorrichtung nach Anspruch 1 oder 2,
**dadurch gekennzeichnet, dass** der seitliche Kanal (6) in der ersten Zone (3) vorgesehen ist und dass die erste Zone (3) und der seitliche Kanal (6) die gleiche Farbe haben.

4. Fallenvorrichtung nach Anspruch 1 oder 2,
**dadurch gekennzeichnet, dass** der seitliche Kanal (6) in der ersten Zone (3) vorgesehen ist und dass die erste Zone (3) und der seitliche Kanal (6) unterschiedliche Farben haben.

5. Fallenvorrichtung nach einem der Ansprüche 1 bis 4,
**dadurch gekennzeichnet, dass** sie eine gerade Anzahl der seitlichen Kanäle (6) aufweist, die zweierweise und mit ihren Austrittsöffnungen (10b) einander zugewandt gegenüberliegend angeordnet sind.

6. Fallenvorrichtung nach einem der Ansprüche 1 bis 5,
**dadurch gekennzeichnet, dass** die zweite Zone (4) transparent ist.

7. Fallenvorrichtung nach einem der Ansprüche 1 bis 6,
**dadurch gekennzeichnet, dass** die erste Zone (3) eine Basis ist und die zweite Zone (4) eine Abdeckung ist, und dass der seitliche Kanal (6) abnehmbar ist.

8. Verwendung einer Fallenvorrichtung nach einem der Ansprüche 1 bis 7 zum Einfangen von *Ceratitis Capitata,*
**dadurch gekennzeichnet, dass** die erste Zone (3) orange oder gelblich ist.

9. Verwendung einer Fallenvorrichtung nach Anspruch 8,
**dadurch gekennzeichnet, dass** sie einen Kanal (6) aufweist, der orange oder gelblich ist.

## Revendications

1. Dispositif de piégeage pour insectes frugivores, comprenant :
[a] une chambre (2) pour confiner des insectes, et
[b] au moins un trou latéral (5) à partir duquel part un conduit latéral (6) vers ladite chambre (2), celui-ci comportant une embouchure d'entrée (10a) et une embouchure de sortie (10b),
[c] ladite chambre (2) comprenant au moins une première zone opaque (3) et une deuxième zone supérieure translucide (4), à travers laquelle une lumière extérieure directe peut entrer dans ladite chambre (2), et
[d] ledit conduit latéral (6) étant transversal par rapport à la direction verticale, selon un angle entre 0 et 20° par rapport à la direction horizontale,
**caractérisé en ce que** ledit conduit latéral (6) est opaque.

2. Dispositif de piégeage selon la revendication 1, **caractérisé en ce que** ledit conduit latéral (6) est horizontal.

3. Dispositif de piégeage selon la revendication 1 ou 2, **caractérisé en ce que** ledit conduit latéral (6) est réalisé dans ladite première zone (3) et **en ce que** ladite première zone (3) et ledit conduit latéral (6) sont de la même couleur.

4. Dispositif de piégeage selon la revendication 1 ou 2, **caractérisé en ce que** ledit conduit latéral (6) est réalisé dans ladite première zone (3) et **en ce que** ladite première zone (3) et ledit conduit latéral (6) sont d'une couleur différente.

5. Dispositif de piégeage selon l'une quelconque des revendications 1 à 4, **caractérisé en ce qu'**il comprend un nombre pair desdits conduits latéraux (6) disposés par deux et avec leurs embouchures de sortie (10b) se faisant mutuellement face.

6. Dispositif de piégeage selon l'une quelconque des revendications 1 à 5, **caractérisé en ce que** ladite deuxième zone (4) est transparente.

7. Dispositif de piégeage selon l'une quelconque des revendications 1 à 6, **caractérisé en ce que** ladite première zone (3) est une base et ladite deuxième zone (4) est un capot, et **en ce que** ledit conduit latéral (6) est amovible.

8. Utilisation d'un dispositif de piégeage pour piéger *Ceratitis Capitata* selon l'une quelconque des revendications 1 à 7, **caractérisée en ce que** ladite première zone (3) est orange ou jaunâtre.

9. Utilisation d'un dispositif de piégeage selon la revendication 8, **caractérisée en ce qu'**elle comprend le fait qu'un conduit (6) est orange ou jaunâtre.
